# EUROPEAN PATENT APPLICATION

(11) **EP 4 574 219 A1**
(43) Date of publication of application: **25.06.2025**
(21) Application number: 24221925.1
(22) Date of filing: 19.12.2024
(51) Int. Cl.: A62C 3/07, A62C 3/16, A62C 37/36, A62C 37/44, B60L 3/00, B60L 58/10, H01M 10/625

(54) **FIRE EXTINGUISHING SYSTEM FOR ELECTRIC VEHICLE AND FIRE EXTINGUISHING METHOD FOR ELECTRIC VEHICLE**

(30) Priority: 21.12.2023 KR 20230188147
(71) Applicant: SK On Co., Ltd., Seoul 03161 (KR)
(72) Inventor: YOO, Tak Kyung, 34124 Daejeon (KR); LEE, Jeong Joo, 34124 Daejeon (KR); CHOI, Yang Kyu, 34124 Daejeon (KR)
(74) Representative: Stolmár & Partner Patentanwälte PartG mbB

(57) **Abstract**

A fire extinguishing system for an electric vehicle includes a charger configured to supply electricity to the electric vehicle and charge a battery mounted on the electric vehicle; a charger control unit configured to receive status information of the electric vehicle or the charger from the electric vehicle or the charger and determine whether the electric vehicle is on fire; and a fire extinguishing device configured to receive a fire extinguishing signal from the charger control unit and extinguish a fire occurring in the electric vehicle.

## Description

### TECHNICAL FIELD

The disclosure and implementations disclosed in this patent document generally relate to a fire extinguishing system for an electric vehicle and a fire extinguishing method for an electric vehicle.

### BACKGROUND

Secondary batteries, unlike primary batteries, may be charged and discharged, and may be applied to devices within various fields such as digital cameras, mobile phones, laptops, hybrid cars, electric cars, and energy storage systems (ESS). Secondary batteries may be lithium-ion batteries, nickel-cadmium batteries, nickel-metal hydride batteries, or nickel-hydrogen batteries. Alternatively, secondary batteries may be all-solid-state batteries using solid electrolytes instead of liquid electrolytes.

In the case of electric vehicles using secondary batteries, the electricity charged in the secondary battery is consumed, and the electric vehicle is connected to a charger to recharge consumed electricity. During the charging process of an electric vehicle, there is a possibility of a fire occurring due to various factors such as short-circuiting, overcharging, and overheating of the battery. Therefore, there is a need to extinguish fires in electric vehicles in a timely manner, and efforts are being made to equip electric vehicle chargers or charging stations with means to extinguish fires in electric vehicles.

### SUMMARY

The present disclosure may be implemented in some embodiments to provide a fire extinguishing system for an electric vehicle or a fire extinguishing method for an electric vehicle, in which whether a fire has occurred in an electric vehicle being charged may be determined.

According to an aspect of the present disclosure, a fire occurring in an electric vehicle being charged may be extinguished.

A fire extinguishing system for an electric vehicle or a fire extinguishing method for an electric vehicle according to an embodiment may be widely applied in green technology fields such as electric vehicles, battery charging stations, and solar power generation and wind power generation using batteries. In addition, a fire extinguishing system for an electric vehicle or a fire extinguishing method for an electric vehicle according to an embodiment may be used in eco-friendly electric vehicles, hybrid vehicles, and the like to ameliorate the effects of climate change by suppressing air pollution and greenhouse gas emissions.

In some embodiments, a fire extinguishing system for an electric vehicle includes a charger configured to supply electricity to the electric vehicle and charge a battery mounted on the electric vehicle; a charger control unit configured to receive status information of the electric vehicle or the charger from the electric vehicle or the charger and determine whether the electric vehicle is on fire; and a fire extinguishing device configured to receive a fire extinguishing signal from the charger control unit and extinguish a fire occurring in the electric vehicle.

The fire extinguishing system for an electric vehicle may further include a connector configured to connect the electric vehicle and the charger so that electricity is supplied from the charger to the electric vehicle, and configured to enable communication between the electric vehicle and the 7charger control unit.

The status information may include an error code, and the error code may include a first state in which an error in the battery is detected or a second state in which a fire occurs in the electric vehicle.

The charger control unit may be configured to receive the error code and send a different fire extinguishing signal according to the first state or the second state to the fire extinguishing device.

The charger control unit may be configured to stop a supply of electricity of the charger when an error code corresponding to the first state is received and configured to send a fire extinguishing preparation signal to the fire extinguishing device.

When the fire extinguishing device receives the fire extinguishing preparation signal, the fire extinguishing device may operate a pressurizing pump for pressurizing a fire extinguishing agent contained in a storage tank, and may close a pipe configured to discharge the fire extinguishing agent stored in the storage tank from the storage tank.

The charger control unit may be configured to stop a supply of electricity of the charger when receiving an error code corresponding to the second state and configured to send a fire extinguishing execution signal to the fire extinguishing device.

The fire extinguishing device may be configured to operate a pressurizing pump for pressurizing a fire extinguishing agent contained in a storage tank when receiving the fire extinguishing execution signal, and may be configured to enable a pipe configured to discharge the fire extinguishing agent stored in the storage tank from the storage tank, to open.

The status information may include at least one of a voltage change of the battery, a temperature change of the battery, and a current change of the charger, and the charger control unit may be configured to analyze at least one of the voltage change of the battery, the temperature change of the battery, and the current change of the charger and to determine whether the electric vehicle is on fire.

The charger control unit may be configured to determine a second state in which a fire has occurred in the electric vehicle when at least one of the voltage change of the battery, the temperature change of the battery, and the current change of the charger is outside of an allowable range.

The fire extinguishing device may include a storage tank storing a fire extinguishing agent, a pressurizing pump pressurizing the fire extinguishing agent contained in the storage tank, a valve configured to open and close a pipe configured to discharge the fire extinguishing agent stored in the storage tank from the storage tank, and a spraying member connected to the pipe and spraying the fire extinguishing agent contained in the storage tank onto the electric vehicle.

The spraying member may be configured to spray the fire extinguishing agent into an area including a lower part of the electric vehicle.

At least a portion of the spraying member may be disposed on a ground and may be disposed in a longitudinal direction of the electric vehicle.

The spraying member may include a first spraying member for spraying the fire extinguishing agent into a lower part of the electric vehicle and a second spraying member for spraying the fire extinguishing agent into an upper part of the electric vehicle.

In some embodiments, a fire extinguishing method for an electric vehicle, extinguishing a fire occurring during charging an electric vehicle equipped with a battery by a charger, includes a communication operation of receiving status information of the electric vehicle or the charger from the electric vehicle or the charger; a determination operation of analyzing the status information and determining whether the electric vehicle is on fire; a signal transmission operation of transmitting a fire extinguishing signal to a fire extinguishing device configured to extinguish the fire in the electric vehicle; and a fire extinguishing operation of preparing to spray a fire extinguishing agent or spraying the fire extinguishing agent when the fire extinguishing signal is transmitted to the fire extinguishing device.

The determination operation may include an error code in the status information, and the error code may include a first state in which an error in the battery is detected or a second state in which a fire occurs in the electric vehicle.

The signal transmission operation may transmit a fire extinguishing preparation signal to the fire extinguishing device in the first state, the fire extinguishing operation may operate a pressurizing pump pressurizing the fire extinguishing agent contained in a storage tank when the fire extinguishing preparation signal is transmitted to the fire extinguishing device, and may close a pipe configured to discharge the fire extinguishing agent stored in the storage tank from the storage tank, and the determination operation may be performed again.

The signal transmission operation may transmit a fire extinguishing execution signal to the fire extinguishing device in the second state. The fire extinguishing operation may operate a pressurizing pump pressurizing the fire extinguishing agent contained in a storage tank when the fire extinguishing execution signal is transmitted to the fire extinguishing device, and may open a pipe configured to discharge the fire extinguishing agent stored in the storage tank from the storage tank.

The determination operation may analyze at least one of a temperature change of the battery, a voltage change of the battery, and a current change of the charger included in the status information and may determine whether the electric vehicle is on fire.

### BRIEF DESCRIPTION OF DRAWINGS

Certain aspects, features, and advantages of the present disclosure are illustrated by the following detailed description with reference to the accompanying drawings.
FIG. 1 is a schematic diagram illustrating a fire extinguishing system for an electric vehicle according to an embodiment.
FIGS. 2A and 2B are a table and a graph illustrating examples of criteria for determining an error code, respectively.
FIGS. 3A and 3B are graphs illustrating examples for comparing a normal state and an abnormal state of a battery during slow charging, respectively.
FIGS. 4A and 4B are graphs illustrating examples for comparing a normal state and an abnormal state of a battery during rapid charging, respectively.
FIG. 5 is a flow chart illustrating a fire extinguishing system for an electric vehicle and a fire extinguishing method for an electric vehicle according to an embodiment.
FIG. 6 is a flow chart illustrating a case in which transmission and reception of an error code is possible in a fire extinguishing system for an electric vehicle according to an embodiment.
FIG. 7 is a flow chart illustrating a case in which transmission and reception of an error code is impossible in a fire extinguishing system for an electric vehicle according to an embodiment.
FIG. 8 is a plan view illustrating locations of an electric vehicle being charged and a fire extinguishing system.
FIGS. 9A and 9B are a plan view and a rear view illustrating states in which a fire extinguishing agent is sprayed onto an electric vehicle, respectively.
FIG. 10 is a plan view illustrating a modified example of a spraying member.

### DETAILED DESCRIPTION

Features of the present disclosure disclosed in this patent document are described by example embodiments with reference to the accompanying drawings.

Before going into the detailed description of the present disclosure, it should be noted that the terms or words used in the present specification and claims described below should not be interpreted as being limited to their conventional or dictionary meanings, and should be interpreted as having meanings and concepts that conform to the technical idea of the present disclosure based on the principle that the inventor may appropriately define the concept of the term in order to explain his or her own invention in the best possible way. Therefore, the embodiments described in this specification and the configurations illustrated in the drawings are only the preferred embodiments and do not represent all of the technical ideas of the present disclosure, and thus it should be understood that there may be various equivalents and modified examples that may replace the embodiments and the configurations at the time of filing this application.

Hereinafter, example embodiments will be described in detail with reference to the attached drawings. At this time, it should be noted that the same components in the attached drawings are represented by the same symbols as much as possible. In addition, detailed descriptions of known functions and configurations that may obscure the gist of the present disclosure will be omitted. For the same reason, some components in the attached drawings are exaggerated, omitted, or schematically illustrated, and the size of each component may not fully reflect the actual size thereof. For example, in this specification, expressions such as upper portion, upper side, upward, lower side, lower portion, downward, side surface, and the like are explained based on the diagram in the drawing, and may be expressed differently if the direction of the corresponding object is changed.

Hereinafter, the fire extinguishing system for electric vehicles and the fire extinguishing method for electric vehicles according to example embodiments are described in detail with reference to the drawings.

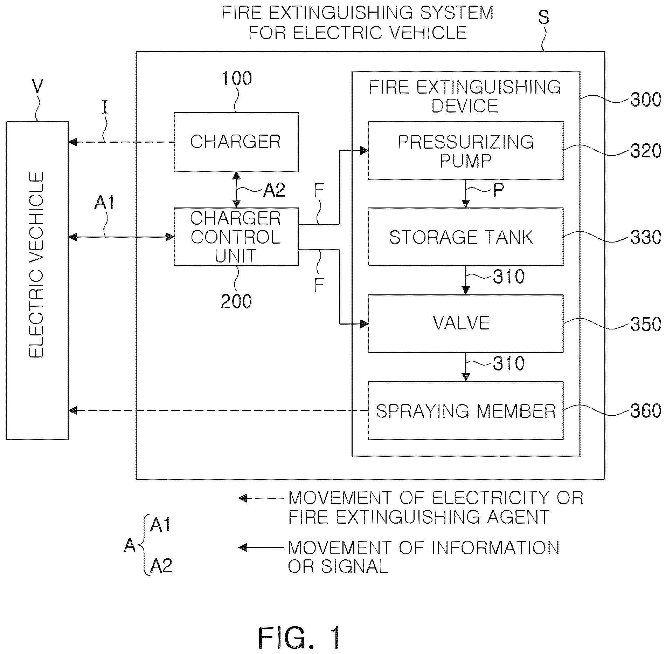

FIG. 1 is a schematic diagram illustrating a fire extinguishing system (S) for an electric vehicle according to an embodiment.

Referring to FIG. 1, the fire extinguishing system (S) for an electric vehicle according to an embodiment may include a charger 100, a charger control unit 200, and a fire extinguishing device 300, and illustrates the direction of movement of electricity (I), a fire extinguishing agent 310, and information or signals.

The charger 100 may be configured to supply electricity (I) to an electric vehicle (V) to charge a battery (B) mounted on the electric vehicle (V). The electric vehicle (V) may be connected to the charger 100 for charging. The method of connecting the electric vehicle (V) and the charger 100 may be wired or wireless. In the present disclosure, a wired connection between the electric vehicle (V) and the charger 100 is illustrative, but is not necessarily limited thereto. The charger 100 may charge the battery (B) with electricity (I) supplied to the charger 100. The electric vehicle (V) may request the supply of electricity (I) from the charger 100.

The solid arrows in FIG. 1 represent the direction of movement of information or signals, and the dashed arrows may represent the direction of movement of electricity (I), extinguishing agent 310, pressurized gas (P) or the like. The information or signals referred to herein may include status information (A) and extinguishing signals (F) described later.

The charger 100 may represent Electric Vehicle Supply Equipment (EVSE) that is an electric vehicle (V) charger 100. The types of chargers 100 may vary. The types of chargers 100 may vary depending on the charging method. The charging method may include a slow charging method using an Alternating Current (AC) power line, a rapid charging method using a Direct Current (DC) power line, a slow charging method using a three-phase AC power line, and the like. The charger 100 used in the fire extinguishing system (S) for electric vehicles or the fire extinguishing method for electric vehicles according to an embodiment may be applied to any of the charging methods above, and may also be applied to other charging methods.

In addition, the form of the charger 100 may be a wall-mounted charger 100 installed on a wall, a stand-alone charger 100 installed to stand on the ground, or a mobile charger 100 configured to be movable. The form of the charger 100 used in the fire extinguishing system (S) for electric vehicles or the fire extinguishing method for electric vehicles according to an embodiment may be any form, and is not necessarily limited to the forms listed above.

The charger control unit 200 may be configured to receive status information A1 of the electric vehicle or status information A2 of the charger from the electric vehicle (V) or the charger 100 and configured to determine whether the electric vehicle (V) is on fire. The status information (A) may include status information A1 of the electric vehicle or status information A2 of the charger. When the electric vehicle (V) is connected to the charger 100, the electric vehicle (V) may also be connected to the charger control unit 200. In addition, the charger 100 and the charger control unit 200 may be connected to enable communication therebetween. The communication referred to here may refer to exchanging electrical signals or information. The status information A1 of the electric vehicle may include information that may determine the status of the battery (B) mounted on the electric vehicle (V) and various information about the electric vehicle (V) in addition to the battery (B). The charger control unit 200 may select and analyze necessary information from the provided status information (A) and determine whether a fire has occurred in the electric vehicle (V). In addition, the charger control unit 200 may transmit a signal necessary for charging the electric vehicle (V) to the electric vehicle (V). Therefore, the electric vehicle (V) and the charger control unit 200 may enable bidirectional communication. The method by which the electric vehicle (V) and the charger control unit 200 communicate is described later.

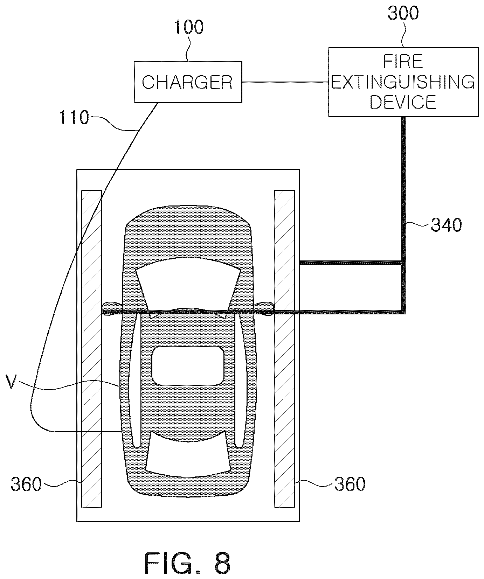

The fire extinguishing device 300 may be configured to receive a fire extinguishing signal (F) from the charger control unit 200 and extinguish a fire occurring in the electric vehicle (V). The fire extinguishing signal (F) sent from the charger control unit 200 to the fire extinguishing device 300 may include a fire extinguishing preparation signal F1 and a fire extinguishing execution signal F2. The role of each fire extinguishing signal (F) and the sending situation are described later. The fire extinguishing device 300 may include a storage tank 330 storing a fire extinguishing agent 310, a pressurizing pump 320 pressurizing the fire extinguishing agent 310 contained in the storage tank 330, a valve 350 configured to open and close a pipe (340 of FIG. 8) configured to discharge the fire extinguishing agent 310 stored in the storage tank 330 from the storage tank 330, and a spraying member 360 connected to the pipe 340 to spray the fire extinguishing agent 310 contained in the storage tank 330 onto an electric vehicle (V). A detailed description of each component will be described later.

The fire extinguishing system (S) for an electric vehicle may further include a connector 110. Referring to FIG. 8, the connector 110 may connect between the electric vehicle (V) and the charger 100. The connector 110 connecting the electric vehicle (V) and the charger 100 may be configured to supply electricity (I) from the charger 100 to the electric vehicle (V). In addition, the connector 110 may be configured to enable communication between the electric vehicle (V) and the charger control unit 200. For example, the connector 110 may include a charging connector and a communication connector, and may connect between the electric vehicle (V) and the charger 100, and at the same time, be connected to the electric vehicle (V) and the charger control unit 200. The connector 110 may be configured as a wire coming from the charger 100, have a plug formed at an end, and may be coupled with a charging port of the electric vehicle (V). There is no limitation on the type of the connector 110. For example, AC single-phase 5-pin, AC 3-phase 7-pin, DC CHAdeMO 10-pin, DC combo 7-pin, or the like may be used. There is no limitation on the type of connector 110, and any type of connector 110 configured to enable electricity and communication between the charger 100 and the electric vehicle (V) may be used. However, in the case of the electric vehicle (V) and the charger 100 that may be charged wirelessly, it is also possible that the connector 110 is not installed.

Various methods may be used for the method of communication between the electric vehicle (V) and the charger control unit 200. For example, if a connector 110 according to the Surface Vehicle Recommended Practice J1772 (SAE J1772) standard is used, communication may be possible by the Power Line Communication (PLC) method, and if a connector 110 according to the Chinese charging standard GB/T is used, a Controller Area Network (CAN) method of communication may be applied.

The fire extinguishing system (S) for an electric vehicle and the fire extinguishing method for an electric vehicle according to an embodiment are provided to determine a fire occurring in an electric vehicle (V) by the charger control unit 200 through status information (A) generated while the charger 100 is charging the electric vehicle (V), and the present disclosure is not limited to the type of the charger 100, the charging method, the type of the connector 110, or the communication method.

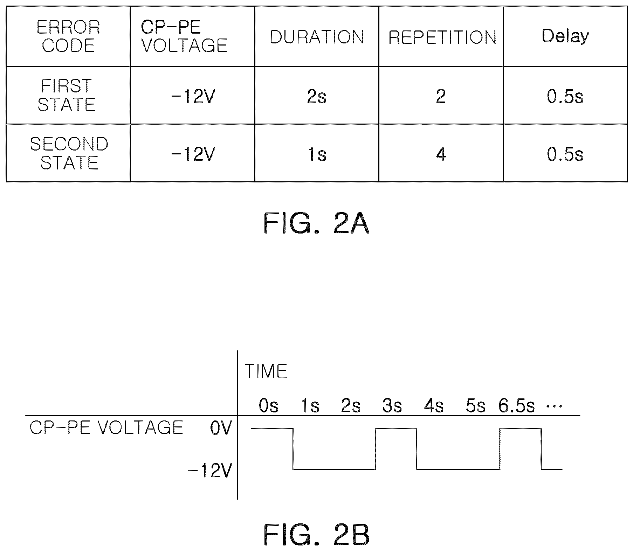

FIGS. 2A and 2B are a table and graph illustrating examples of criteria for determining an error code, respectively.

Referring to FIGS. 2A and 2B, examples of criteria for determining an error code are described.

An error code may be included in status information (A). An error code may be a code defined in advance according to certain criteria. An error code may be a code programmed into an electric vehicle (V) or a charger 100. An electric vehicle (V) may transmit status information to a charger control unit 200 by including an error code in the status information (A) of the electric vehicle (V) through the status of the electric vehicle (V). In addition, the charger control unit 200 may receive the status information (A) from the electric vehicle (V) and determine whether the information corresponds to an error code.

Inside the electric vehicle (V), a controller configured to collect information on the status of the electric vehicle (V) and the battery (B), such as a Battery Management System (BMS), an Electronic Control Unit (ECU), a Micro Controller Unit (MCU), and the like, and to exchange signals with the charger control unit 200 may be installed. The electric vehicle (V) may transmit the status information (A) of the electric vehicle (V) including an error code to the charger control unit 200 through the controller such as the BMS.

The error code may include a first state or a second state. The first state may be a state in which an error in the battery (B) is detected. The first state may be a state in which an error in the battery (B) is detected and the battery (B) is not charged normally. There may be various causes for an error in the battery (B), and for example, the causes may be physical damage, overcharging, overheating, or the like of the battery (B). In this case, the electric vehicle (V) may transmit an error code corresponding to the first state to the charger control unit 200. The second state may be a state in which a fire has occurred in the electric vehicle (V). For example, a fire may have started from the battery (B) due to an abnormality in the battery (B) after charging has started. At this time, the electric vehicle (V) may transmit an error code corresponding to the second state to the charger control unit 200.

FIG. 2A is a table illustrating an example of a standard for determining an error code corresponding to the first state and the second state by borrowing the SAE J1772 standard. SAE J1772 classifies the charging state of the electric vehicle (V) according to Table 1 below.

**[Table 1]**

| Default State | Charge Status | CP-PE Resistance | CP-PE Voltage |
|---|---|---|---|
| State A | Standby | Open | +12V |
| State B | Vehicle Detected | 2740Ω | +9±1V |
| State C | Ready (Charging) | 882Ω | +6±1V |
| State D | Ventilation Function | 246Ω | +3±1V |
| State E | No Power (Off) | | 0V |
| State F | Error | | -12V |

The charging port according to SAE J1772 includes a Control Pilot (CP) and a Protective Earth (PE). The Control Pilot (CP) may refer to a communication line used to negotiate a charge level between an electric vehicle (V) and a charger 100, and the Protective Earth (PE) may be a pin that serves as a ground. The charging state may be divided according to the magnitude of the CP-PE voltage, which is a voltage level of the CP. When the CP-PE voltage corresponds to -12 V, it can be seen that the charging state corresponds to an error (state F), and by using this, FIG. 2A according to an embodiment illustrates subdividing the error. For example, even when the CP-PE voltage is -12 V, it may be divided into a first state or a second state according to the duration and the number of repetitions. For example, the electric vehicle (V) may be determined to be in the first state when the CP-PE voltage is -12 V, the duration is 2s (seconds), and the number of repetitions is 2. In addition, the electric vehicle (V) may be determined to be in the second state when the CP-PE voltage is -12 V, the duration is 1s (second), and the number of repetitions is 4.

FIG. 2B is a graph illustrating the CP-PE voltage change corresponding to the first state over time. Looking at the graph, it can be confirmed that the CP-PE voltage is -12 V for about 2s (seconds) between 0.5s (seconds) and 2.5s (seconds), and that the CP-PE voltage is -12 V for about 2s (seconds) between 3.5s (seconds) and 5.5s (seconds). Therefore, in this case, it may be determined that the electric vehicle (V) corresponds to the first state.

The criteria for determining the error code described in FIGS. 2A and 2B are only examples presented by borrowing the criteria of SAE J1772, and the conditions of the criteria for determining the error code may be changed at any time depending on the type of charger 100.

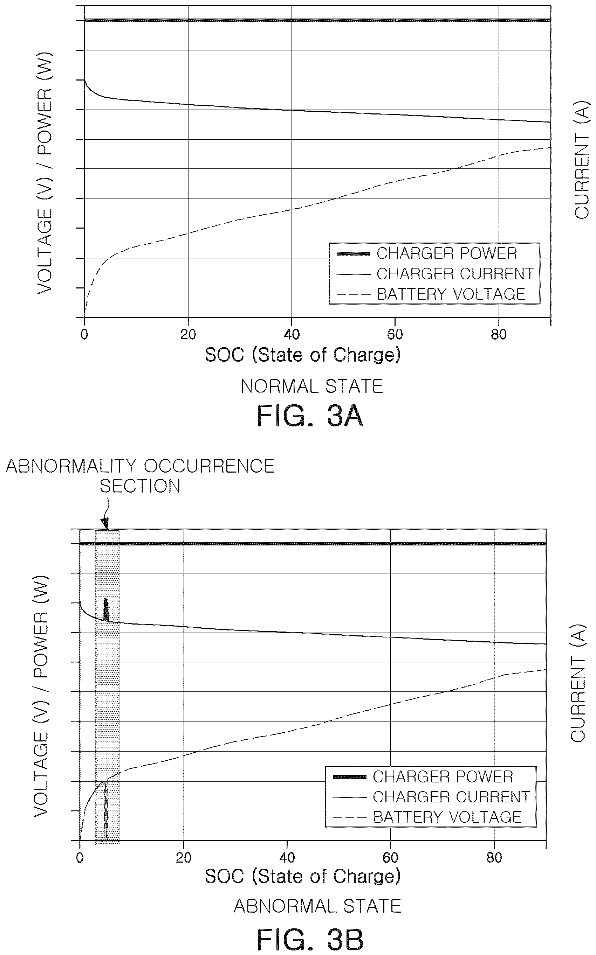

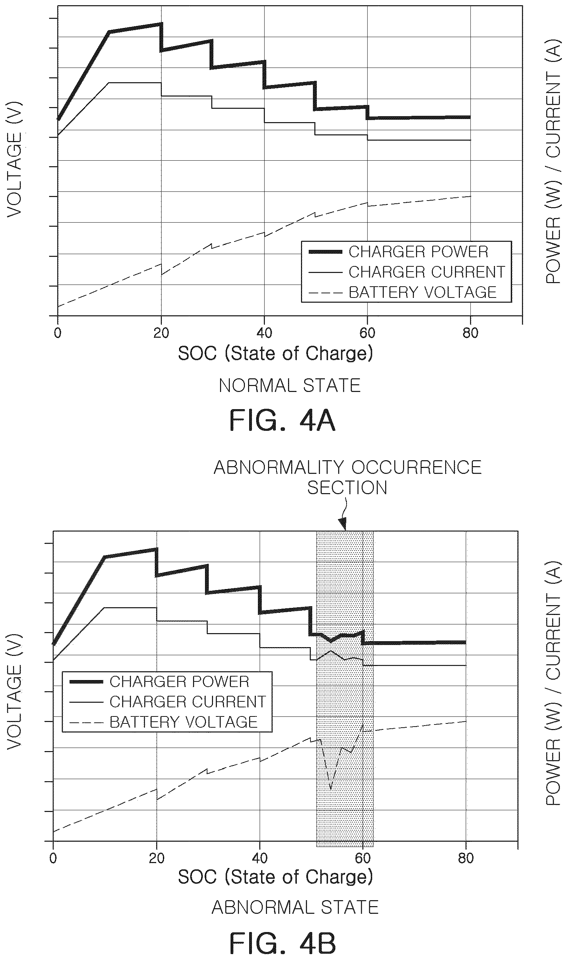

FIGS. 3A and 3B are graphs illustrating examples for comparing the normal state and abnormal state of the battery (B) during slow charging, respectively, and FIGS. 4A and 4B are graphs illustrating examples for comparing the normal state and abnormal state of the battery (B) during rapid charging, respectively.

Referring to FIG. 3A to FIG. 4B, a method of determining an abnormality of the battery (B) when an error code cannot be transmitted or received is described.

Although the electric vehicle (V) and the charger 100 may be able to transmit and receive error codes corresponding to the first and second states, there may be cases in which the error codes cannot be transmitted or received. For example, there may be cases where the electric vehicle (V) is not programmed to generate error codes corresponding to the first and second states. Therefore, at this time, it may be necessary to determine whether the charger control unit 200 corresponds to the first or second state.

After the electric vehicle (V) is connected to the charger 100, the electric vehicle (V) may request the charger 100 to supply electricity required for charging, and this may be referred to as a power supply request. The charger 100 supplies electricity to the electric vehicle (V) to charge the battery (B). At this time, the voltage of the battery (B) installed in the electric vehicle (V) changes according to the State of Charge (SOC), and the current of the charger 100 also changes. The current of the charger 100 may refer to the current provided to the electric vehicle (V) by the charger 100. The State of Charge (SOC) refers to the remaining capacity of the battery (B), and may be a scale that may display the fuel amount of the battery (B). When the SOC is 100%, it may indicate a state where the battery (B) is full, and when it is 0%, it may indicate a state where the battery (B) is completely consumed.

The graphs illustrated in FIG. 3A to FIG. 4B are graphs illustrating changes in the voltage of the battery (B) cell, the power and the current of the charger 100 according to the State of Charge (SOC). The changes in the voltage, current, and power illustrated in FIG. 3A to FIG. 4B are graphs illustrating tendencies for illustrating examples of occurrence of abnormalities in the battery (B), and the values of voltage, current, power, and SOC are only examples and are not limited thereto.

FIG. 3A is a graph illustrating a case in which there is no abnormality in the battery (B) during a slow charging process, and FIG. 3B is a graph illustrating a section in which an abnormality occurs in the battery (B) during a slow charging process. The horizontal axis of the graphs of FIGS. 3A and 3B represents the SOC of the battery (B), and the vertical axis represents the voltage of the battery (B), the current and the power of the charger 100. FIGS. 3A and 3B represent the trends of the voltage of the battery (B) and the current and power of the charger 100, and detailed numerical values are omitted in FIGS. 3A and 3B.

During the process of slow charging of the battery (B), the SOC of the battery (B) may increase. At this time, the voltage of the battery (B) may tend to increase overall. However, looking at the abnormality occurrence section illustrated in FIG. 3B, a section in which the voltage suddenly drops may occur when an abnormality occurs in the battery (B).

For example, if a short circuit occurs inside the battery (B), the voltage of the battery (B) may suddenly drop, which may lead to a fire in the battery (B). As with the voltage change of the battery (B), the current of the charger 100 may also change as the SOC increases. The current of the charger 100 may have a tendency to decrease as the SOC increases. Looking at the abnormality occurrence section, when an abnormality occurs in the battery (B), a section in which the current of the charger 100 rapidly increases occurs, and this may correspond to a section in which the voltage of the battery (B) suddenly drops.

FIG. 4A is a graph illustrating a case in which there is no abnormality in the battery (B) during the rapid charging process, and FIG. 4B is a graph illustrating a section in which an abnormality occurs in the battery (B) during the rapid charging process. The horizontal axes of the graphs of FIGS. 4A and 4B also illustrate the SOC of the battery (B), and the vertical axes illustrate the voltage of the battery (B), and the current and the power of the charger 100. FIGS. 4A and 4B show the trend of the voltage of the battery (B) and the current and power of the charger 100, and detailed numerical values are omitted in FIGS. 4A and 4B.

The SOC of the battery (B) may increase during the rapid charging process. At this time, the voltage of the battery (B) may decrease during charging, but may increase again as the SOC increases, so that it may have an overall increasing trend. However, when looking at the abnormal occurrence section illustrated in FIG. 4B, if an abnormality occurs in the battery (B), a sudden drop section in which the voltage continuously decreases while the SOC increases may occur.

Similar to the voltage change of the battery (B), the current or power of the charger 100 may also change as the SOC increases. The current or power of the charger 100 may have a tendency to decrease in a stepwise manner as the SOC increases, except for the low section of the SOC. When looking at the abnormal occurrence section, when an abnormality occurs in the battery (B), the current or power of the charger 100 is not constant in a specific section, and sections where it rises and falls occur, which may correspond to a section in which the voltage of the battery (B) suddenly drops.

The SOC values corresponding to the abnormal occurrence section of the voltage, current, and power changes illustrated in FIG. 3A to FIG. 4B are only examples and are not necessarily limited thereto.

The electric vehicle (V) may transmit information to the charger control unit 200 by including the voltage change of the battery (B) in the status information A1. The charger control unit 200 may receive the status information A2 on the current change from the charger 100. Therefore, the charger control unit 200 may determine whether the battery (B) is abnormal through the voltage change of the battery (B) or the current change of the charger 100. Furthermore, based thereon, the charger control unit 200 may determine whether the electric vehicle (V) is on fire, which will be described later.

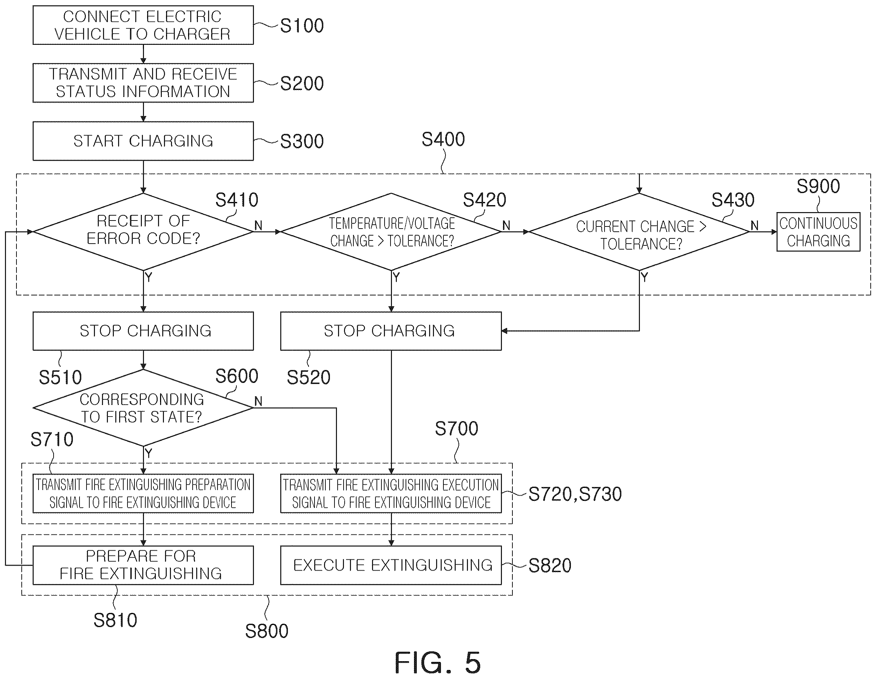

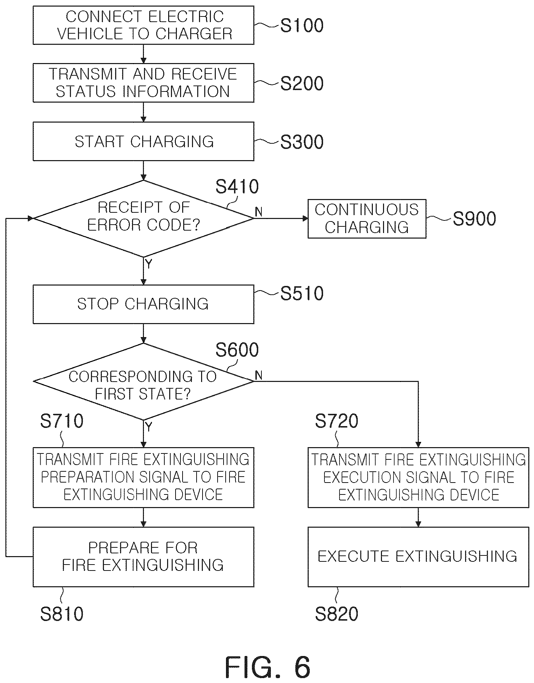

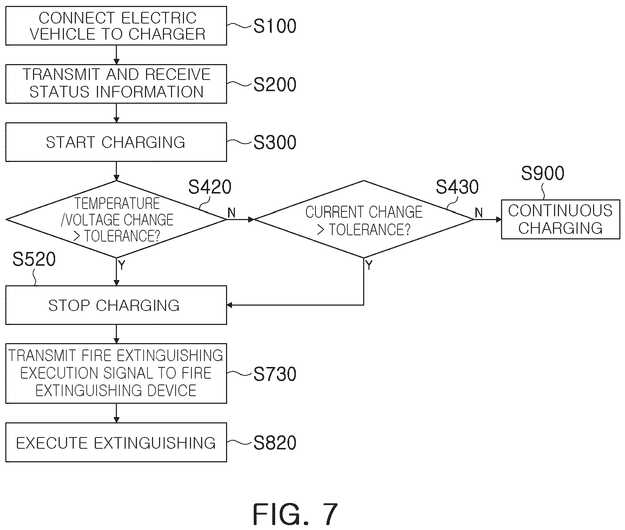

FIG. 5 is a flow chart illustrating a fire extinguishing system (S) for an electric vehicle and a fire extinguishing method for an electric vehicle according to an embodiment, FIG. 6 is a flow chart illustrating a case in which transmission and reception of an error code is possible in the fire extinguishing system (S) for an electric vehicle according to an embodiment, and FIG. 7 is a flow chart illustrating a case in which transmission and reception of an error code is impossible in the fire extinguishing system (S) for an electric vehicle according to an embodiment.

FIG. 5 is a flow chart that integrates the flow charts of FIG. 6 and FIG. 7. Referring to FIG. 5 to FIG. 7, the process of operating the fire extinguishing system (S) for an electric vehicle is described.

An electric vehicle (V) may be connected to a charger 100 for charging (S100). As described above, there is no limitation on the method of connecting the electric vehicle (V) and the charger 100, and not only a method of physically connecting using a connector 110, but also a method of connection for wireless charging is possible.

After the electric vehicle (V) and the charger 100 are connected (S100), the electric vehicle (V) or the charger 100 may transmit and receive status information (A) with the charger control unit 200 (S200). The method of transmitting and receiving the status information (A) may be one of the various communication methods described above, and is not limited to a specific method.

By transmitting and receiving status information (A), the electric vehicle (V) may request the supply of electricity (I) from the charger 100, and the charger 100 may supply electricity (I) and charging may begin (S300). The charging method of the charger 100 may be one of the various charging methods described above, and is not limited to a specific method.

After charging starts, the electric vehicle control unit 200 may determine whether the electric vehicle (V) is on fire through the status information (A) (S400). If the electric vehicle (V) may determine the error code, the charger control unit 200 may receive the error code (S410). The electric vehicle (V) may determine the error code depending on the vehicle type, whether it is updated, or the like. When corresponding to the first state or the second state, the electric vehicle (V) may determine the error code and transmit information to the charger control unit 200 by including the error code in the status information (A).

In the case in which transmission and reception of the error code is possible, the charger control unit 200 may be configured to receive the error code (S410) and send different fire extinguishing signals (F) to the fire extinguishing device 300 depending on the first state or the second state (S700). The fire extinguishing signal (F) sent by the charger control unit 200 to the fire extinguishing device 300 may include an extinguishing preparation signal F1 or an extinguishing execution signal F2.

The charger control unit 200 may be configured to stop the power supply of the charger 100 when an error code corresponding to the first state is received (S510). Since the first state is a state in which an error of the battery (B) is detected, continued charging may cause problems such as overheating of the battery (B), which may increase the possibility of occurrence of a fire. Therefore, the charger control unit 200 may stop charging in the first state. When the charger control unit 200 receives an error code corresponding to the first state, it may recognize that the electric vehicle (V) is in the first state. The charger control unit 200 recognized as the first state may be configured to stop charging and then send an extinguishing preparation signal F1 to the fire extinguishing device 300 (S710).

The fire extinguishing device 300 may receive a fire extinguishing preparation signal F1 and prepare for fire extinguishing (S810). For example, the fire extinguishing device 300 may be configured to operate a pressurizing pump 320 that pressurizes a fire extinguishing agent 310 contained in a storage tank 330. The pressurizing pump 320 may pressurize the fire extinguishing agent 310 in the storage tank 330 to increase (accumulate) the pressure inside the storage tank 330 so that the fire extinguishing agent 310 may be ejected. When the fire extinguishing device 300 receives a fire extinguishing preparation signal F1, the fire extinguishing device 300 may close a pipe 340 configured to discharge the fire extinguishing agent 310 stored in the storage tank 330 from the storage tank 330. A valve 350 may be configured to open and close upon receiving the fire extinguishing signal (F). The valve 350 may be electrically operated. As the valve 350 opens and closes, the fire extinguishing agent 310 whose pressure increases may or may not be discharged.

The charger control unit 200 may be configured to directly transmit the fire extinguishing signal (F) to the pressurizing pump 320 or the valve 350 of the fire extinguishing device 300. In this case, the charger control unit 200 may separately transmit the fire extinguishing signal (F) to the pressurizing pump 320 and the valve 350, respectively, and the pressurizing pump 320 may operate or stop according to the fire extinguishing signal (F), and the valve 350 may open or close according to the fire extinguishing signal (F).

When the charger control unit 200 receives an error code, the error code may correspond to the first state or the second state. Therefore, when the error code corresponding to the first state is not received, the error code may be in the second state. However, in this specification, the error code includes the first state and the second state as an example, but is not limited thereto, and the error code may be further subdivided depending on the situation. For example, the error code may additionally include the third state and the fourth state depending on the degree of fire in the vehicle, and in this case, the flow charts of FIGS. 5 to 7 may be changed depending on the added state.

The charger control unit 200 may be configured to stop the power supply of the charger 100 (S510) when an error code corresponding to the second state is received. Since the second state is a state in which a fire has occurred in the electric vehicle (V), continuous charging may further worsen the fire. Therefore, the charger control unit 200 may stop the power supply of the charger 100 in the second state. When the charger control unit 200 receives an error code corresponding to the second state, it may recognize that the electric vehicle (V) is in the second state. The charger control unit 200 recognized as the second state may be configured to send a fire extinguishing execution signal F2 to the fire extinguishing device 300 (S720).

The fire extinguishing device 300 may execute fire extinguishing (S820) when receiving a fire extinguishing execution signal F2. For example, the fire extinguishing device 300 may be configured to operate a pressurizing pump 320 that pressurizes a fire extinguishing agent 310 contained in a storage tank 330. The pressurizing pump 320 may pressurize the fire extinguishing agent 310 to accumulate pressure so that the fire extinguishing agent 310 may be ejected. When the fire extinguishing device 300 receives a fire extinguishing execution signal F2, the fire extinguishing device 300 may enable a pipe 340 to open, configured to discharge the fire extinguishing agent 310 stored in the storage tank 330 from the storage tank 330. After the pipe 340 is opened, the compressed extinguishing agent 310 is sprayed to the electric vehicle (V) where the fire occurred, thereby extinguishing the fire in the electric vehicle (V) .

The charger control unit 200 may be configured to directly transmit a fire extinguishing signal (F) to the pressurizing pump 320 or valve 350 of the fire extinguishing device 300, or, in the case in which the fire extinguishing device 300 further includes a fire extinguishing device control unit, the charger control unit 200 may be configured to transmit a fire extinguishing execution signal F2 to the fire extinguishing device control unit.

For example, when a fire extinguishing preparation signal F1 is transmitted to the fire extinguishing device 300 in the first state, the charger control unit 200 may determine whether an error code has been received again (S410). Therefore, the charger control unit 200 may be configured to determine again whether the electric vehicle (V) is maintained in the first state or whether a fire occurs and becomes to the second state.

The status information (A) may include at least one of the voltage change of the battery (B), the temperature change of the battery (B), and the current change of the charger 100. The charger control unit 200 may be configured to analyze at least one of the voltage change of the battery (B), the temperature change of the battery (B), and the current change of the charger 100 to determine whether the electric vehicle (V) is on fire. For example, the charger control unit 200 may determine whether the temperature change of the battery (B) or the voltage change of the battery is outside the allowable range (S420) or whether the current change of the charger 100 is outside the allowable range (S430), thereby determining whether the electric vehicle (V) is on fire.

An electric vehicle (V) for which an error code is not programmed in advance may transmit status information (A) including at least one of the temperature change or the voltage change of the battery (B) instead of the error code to the charger control unit 200, and the charger control unit 200 may determine whether the electric vehicle (V) is on fire based thereon.

In the case in which transmission and reception of error codes are impossible, the status information (A) transmitted to the charger 100 may include at least one of the temperature change and the voltage change of the battery (B). For example, the electric vehicle (V) may include at least one of a temperature sensor for measuring the temperature of the battery (B) and a voltage meter for measuring the voltage of the battery (B). Through the sensor or meter, the electric vehicle (V) may transmit the status information (A) including at least one of the temperature change and the voltage change of the battery (B) to the charger control unit 200.

The charger control unit 200 may be configured to analyze at least one of the temperature change and the voltage change of the battery (B) to determine whether a fire has occurred in the electric vehicle (V). For example, the determination of whether a fire has occurred based on the voltage change of the battery (B) may follow the determination method described above in FIG. 3A to FIG. 4B. For example, the charger control unit 200 may be configured to determine whether a fire has occurred based on a section in which the voltage of the battery (B) being charged suddenly drops.

The determination of whether a fire has occurred based on the temperature change of the battery (B) may be determined by a temperature rise of the battery (B). For example, if the temperature of the battery (B) suddenly rises, it can be seen that a fire has occurred in the battery (B) and a fire has occurred in the electric vehicle (V).

The charger control unit 200 may be configured to determine whether a fire has occurred in the electric vehicle (V) by analyzing the current change of the electricity provided by the charger 100. The determination method based on the current change may follow the determination method described above in FIG. 3A to FIG. 4B. For example, if there is a section in which the current of the charger 100 suddenly rises, the determination of whether a fire has occurred may be made based thereon.

In summary, the charger control unit 200 may be configured to determine that a fire has occurred in the electric vehicle (V) in the second state when at least one of the temperature change of the battery (B), the voltage change of the battery (B), and the current change of the charger 100 exceeds the allowable range. The allowable range may vary depending on various factors such as the type of the electric vehicle (V), the capacity of the battery (B), and the type of the charger 100.

For example, in the case of a voltage change of a battery (B), the electric vehicle (V) may obtain the voltage change by measuring and multiplying the resistance value of the battery (B) and the current change using the Direct Current Internal Resistance (DCIR) technique. If the voltage change is outside of the allowable range, the charger control unit 200 may be configured to determine a second state in which a fire has occurred in the electric vehicle (V).

For example, in the case of a temperature change of the battery (B), if the temperature of the battery (B) rises by 1°C or more per second, the charger control unit 200 may determine that a fire has occurred in the electric vehicle (V).

For example, in the case of a current change of a charger 100, an instantaneous current change of the current tolerance or more of the charger 100 may occur. The current tolerance referred to here may refer to an allowable current change value set in consideration of a case in which the current changes, such as rapid charging. If a fire occurs due to abnormality with the battery (B), the current of the charger 100 that exceeds the current tolerance may occur, and the number of occurrences may be once or more during charging. The allowable range of the current tolerance and the number of occurrences may vary depending on various factors such as the type of electric vehicle (V), the capacity of the battery (B), and the type of the charger 100.

It should be noted that the allowable range for the voltage change of the battery (B), the temperature change of the battery (B), and the current change of the charger 100 listed above is only an example and may be changed at any time depending on the situation.

If the temperature change or voltage change of the battery (B) exceeds the allowable range, or the current change of the charger 100 exceeds the allowable range, charging may be stopped (S520). The reasons for stopping charging are as described above.

After stopping charging (S520), the charger control unit 200 determines that the electric vehicle (V) is in the second state, and may transmit a fire extinguishing execution signal F2 to the fire extinguishing device 300 (S730). The fire extinguishing execution (S820) is as described above.

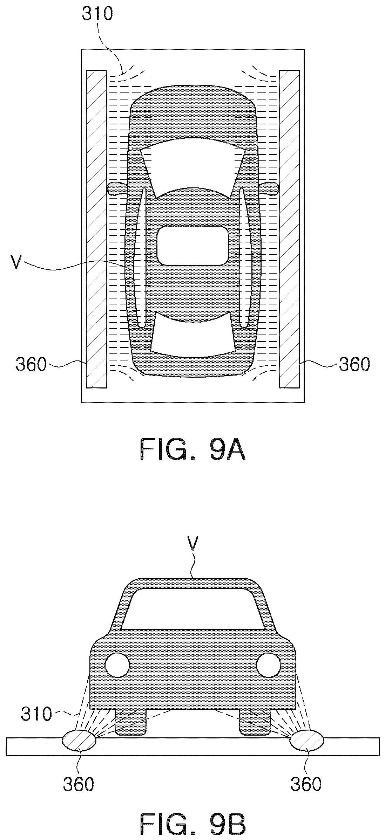

FIG. 8 is a plan view illustrating the positions of the electric vehicle (V) being charged and the fire extinguishing system (S), and FIGS. 9A and 9B are a plan view and a rear view illustrating a state in which the fire extinguishing agent 310 is sprayed onto the electric vehicle (V), respectively.

Referring to FIGS. 8, 9A and 9B together with FIG. 1, the configuration and operation method of the fire extinguishing device 300 can be known.

The fire extinguishing device 300 may include a storage tank 330, a pressurizing pump 320, a valve 350, and a spraying member 360.

The storage tank 330 may be a tank storing a fire extinguishing agent 310. The shape of the storage tank 330 is not limited, and the type of the fire extinguishing agent 310 is not limited. However, the fire extinguishing agent 310 should be configured to be suitable for extinguishing a fire occurring in an electric vehicle (V), and the capacity of the storage tank 330 should be able to accommodate a sufficient amount to extinguish a fire in the electric vehicle (V).

The pressurizing pump 320 may be a pump that pressurizes the fire extinguishing agent 310 contained in the storage tank 330. For example, the pressurizing pump 320 may be a gas pressure type. The pressurizing pump 320 may operate by injecting high-pressure gas into the storage tank 330 to increase the pressure inside the storage tank 330.

The valve 350 may be configured to open and close the pipe 340. The pipe 340 may be configured to discharge the fire extinguishing agent 310 stored in the storage tank 330 from the storage tank 330. The shape of the pipe 340 is not limited, and any shape that may withstand high pressure and smoothly discharge the fire extinguishing agent 310 may be used. The valve 350 may be configured to be openable and closed, and may be configured to be opened or closed according to a fire extinguishing signal (F) transmitted from the charger control unit 200.

The spraying member 360 may be configured to be connected to the pipe 340 and spray the fire extinguishing agent 310 contained in the storage tank 330 onto the electric vehicle (V). For example, the spraying member 360 may be in the form of a tube and include a plurality of nozzles. The plurality of nozzles may be configured to be connected to the spraying member 360 to rapidly and widely spray the high-pressure extinguishing agent 310. Although the plurality of nozzles are not illustrated in the drawing, the shape of the nozzles is not limited, and the number of nozzles may be sufficiently provided to spray the fire extinguishing agent 310 onto a wide area of the electric vehicle (V) .

The spraying member 360 may be configured to spray the fire extinguishing agent 310 onto an area including the lower part of the electric vehicle (V). For example, at least a portion of the spraying member 360 may be buried in the ground. Therefore, the spraying member 360 may not interfere with the movement of the electric vehicle (V) during the process of moving and parking for charging. The spraying member 360 may include a pipe shape and may be disposed in the longitudinal direction of the electric vehicle (V). The spraying members 360 may be disposed on both sides of the electric vehicle (V) parked for charging, and may be disposed side by side in the longitudinal direction. Therefore, the fire extinguishing agent 310 sprayed through the spraying member 360 may be sprayed on most of the lower part of the electric vehicle (V).

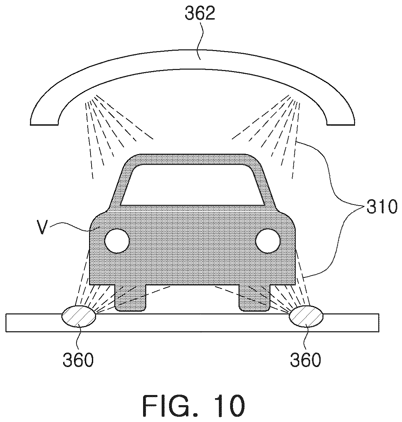

FIG. 10 is a plan view illustrating a modified example of the spraying member 360.

Referring to FIG. 10, the spraying member 360 may include a first spraying member 361 and a second spraying member 362.

The first spraying member 361 may be an spraying member 360 that sprays the fire extinguishing agent 310 on the lower part of the electric vehicle (V). The shape of the first spraying member 361 may be the same shape as the spraying member 360 illustrated in FIG. 8 and FIGS. 9A and 9B.

The second spraying member 362 may be an spraying member 360 that sprays the fire extinguishing agent 310 on the upper part of the electric vehicle (V). For example, the second spraying member 362 may be in the shape of a roof located above the parked electric vehicle (V). The second spraying member 362 may be formed to cover most of the parked electric vehicle (V). The second spraying member 362 may be equipped with a sprinkler configured to spray the fire extinguishing agent 310 from the upper part to the lower part. The second spraying member 362 may be equipped with at least one sprinkler, and the number of sprinklers may be adjusted so that the fire extinguishing agent 310 is sprayed on most areas of the parked electric vehicle (V).

Referring again to FIG. 5, a fire extinguishing method for an electric vehicle according to an embodiment will be described in entirety.

The fire extinguishing method for an electric vehicle according to an embodiment is a method for extinguishing a fire that occurred while an electric vehicle (V) equipped with a battery (B) is being charged by a charger 100, and may include a communication operation (S200), a determination operation (S400), a signal transmission operation (S700), and a fire extinguishing operation (S800).

The communication operation (S200) may be an operation of receiving status information (A) of the electric vehicle (V) or the charger 100 from the electric vehicle (V) or the charger 100. The electric vehicle (V) may include a configuration that collects and processes information about the electric vehicle (V) and the battery (B) equipped in the electric vehicle (V), such as a BMS, an ECU, and an MCU, and the charger control unit 200 may receive status information (A) of the electric vehicle (V) from the electric vehicle (V). However, the communication operation (S200) may include a two-way communication in which the charger control unit 200 transmits information necessary for charging to the electric vehicle (V).

The determination operation (S400) may be an operation for analyzing the status information (A) to determine whether a fire has occurred in the electric vehicle (V).

For example, there may be a case in which the electric vehicle (V) and the charger 100 may transmit and receive error codes. In this case, in the determination operation, an error code may be included in the status information (A), and the error code may include a first state in which an error in the battery (B) is detected or a second state in which a fire has occurred in the electric vehicle (V). The charger control unit 200 may receive the error code (S410).

On the other hand, there may be cases in which the electric vehicle (V) and the charger 100 cannot transmit and receive error codes. At this time, the status information (A) may include temperature changes or voltage changes of the battery (B). In addition, the information provided from the charger 100 may include current changes of the charger 100. Therefore, in the determination operation, at least one of the temperature changes or voltage changes of the battery (B) may be analyzed to determine whether there is a fire (S420), or the current changes of the charger 100 may be analyzed to determine whether there is a fire (S430). For example, as described above, it may be determined whether the temperature change or voltage change of the battery (B) is outside of the allowable range, or if the temperature change or voltage change of the battery (B) is not outside of the allowable range, whether the current change of the charger 100 is outside of the allowable range.

The signal transmission operation (S700) may be an operation of transmitting a fire extinguishing signal (F) to a fire extinguishing device 300 configured to suppress a fire that has occurred in an electric vehicle (V). The fire extinguishing signal (F) transmitted to the fire extinguishing device 300 may include a fire extinguishing preparation signal F1 and a fire extinguishing execution signal F2. For example, in a first state, the fire extinguishing preparation signal F1 may be transmitted to the fire extinguishing device 300 (S710), and in a second state, the fire extinguishing execution signal F2 may be transmitted to the fire extinguishing device 300 (S720).

The fire extinguishing operation (S800) may be an operation for preparing to spray the fire extinguishing agent 310 or spraying the fire extinguishing agent 310 when a fire extinguishing signal (F) is transmitted to the fire extinguishing device 300. For example, when a fire extinguishing preparation signal F1 is transmitted to the fire extinguishing device 300, the fire extinguishing preparation (S810) may be performed to operate the pressurized pump 320 and close the pipe 340. In addition, when a fire extinguishing execution signal F2 is transmitted to the fire extinguishing device 300, the fire extinguishing execution (S820) may be performed to operate the pressurized pump 320 and open the pipe 340.

In the first state, the determination operation (S400) may be performed again after the fire extinguishing operation (S810), and this may be to additionally determine whether the electric vehicle (V) is maintained in the first state or whether a fire occurs and changes to the second state.

The fire extinguishing method for electric vehicles according to an embodiment may include a charging start operation (S300) in which a charger 100 starts charging an electric vehicle (V), and charging stop operations (S510 and 520) in which charging is stopped. The charging start operation (S300) may be performed after the communication operation (S200), and the charging stop operations (S510 and 520) may be performed after the determination operation (S400).

If it is determined in the determination operation (S400) that there is no abnormality in the electric vehicle, a continuous charging operation (S900) in which charging is continued may be performed.

As set forth above, according to an embodiment, a fire occurring in a battery pack may be extinguished.

According to an embodiment, a fire occurring in a battery pack may be prevented from spreading.

According to an embodiment, a fire occurring in a battery pack may be detected early to prevent the fire from growing.

Only specific examples of implementations of certain embodiments are described.

Aspect 1) A fire extinguishing system for an electric vehicle, comprising: a charger configured to supply electricity to the electric vehicle and charge a battery mounted on the electric vehicle; a charger control unit configured to receive status information of the electric vehicle or the charger from the electric vehicle or the charger and determine whether the electric vehicle is on fire; and a fire extinguishing device configured to receive a fire extinguishing signal from the charger control unit and extinguish a fire occurring in the electric vehicle.

Aspect 2) The fire extinguishing system of aspect 1, further comprising a connector configured to connect the electric vehicle and the charger so that electricity is supplied from the charger to the electric vehicle, and configured to enable communication between the electric vehicle and the charger control unit.

Aspect 3) The fire extinguishing system of any one of aspect 1 to 2, wherein the status information includes an error code, wherein the error code includes a first state in which an error in the battery is detected or a second state in which a fire occurs in the electric vehicle.

Aspect 4) The fire extinguishing system of aspect 3, wherein the charger control unit is configured to receive the error code and send a different fire extinguishing signal according to the first state or the second state to the fire extinguishing device.

Aspect 5) The fire extinguishing system of aspect 4, wherein the charger control unit is configured to stop a supply of electricity of the charger when an error code corresponding to the first state is received and configured to send a fire extinguishing preparation signal to the fire extinguishing device, wherein, when the fire extinguishing device receives the fire extinguishing preparation signal, the fire extinguishing device operates a pressurizing pump for pressurizing a fire extinguishing agent contained in a storage tank, and closes a pipe configured to discharge the fire extinguishing agent stored in the storage tank from the storage tank.

Aspect 6) The fire extinguishing system of any one of aspect 4 to 5, wherein the charger control unit is configured to stop a supply of electricity of the charger when receiving an error code corresponding to the second state and configured to send a fire extinguishing execution signal to the fire extinguishing device, wherein the fire extinguishing device is configured to operate a pressurizing pump for pressurizing a fire extinguishing agent contained in a storage tank when receiving the fire extinguishing execution signal, and configured to enable a pipe configured to discharge the fire extinguishing agent stored in the storage tank from the storage tank, to open.

Aspect 7) The fire extinguishing system of any one of aspect 1 to 6, wherein the status information includes at least one of a voltage change of the battery, a temperature change of the battery, and a current change of the charger, and the charger control unit is configured to analyze at least one of the voltage change of the battery, the temperature change of the battery, and the current change of the charger and to determine whether the electric vehicle is on fire.

Aspect 8) The fire extinguishing system of aspect 7, wherein the charger control unit is configured to determine a second state in which a fire has occurred in the electric vehicle when at least one of the voltage change of the battery, the temperature change of the battery, and the current change of the charger is outside of an allowable range.

Aspect 9) The fire extinguishing system of any one of aspect 1 to 8, wherein the fire extinguishing device includes a storage tank storing a fire extinguishing agent, a pressurizing pump pressurizing the fire extinguishing agent contained in the storage tank, a valve configured to open and close a pipe configured to discharge the fire extinguishing agent stored in the storage tank from the storage tank, and a spraying member connected to the pipe and spraying the fire extinguishing agent contained in the storage tank onto the electric vehicle.

Aspect 10) The fire extinguishing system of aspect 9, wherein the spraying member is configured to spray the fire extinguishing agent into an area including a lower part of the electric vehicle, wherein at least a portion of the spraying member is disposed on a ground and is disposed in a longitudinal direction of the electric vehicle.

Aspect 11) The fire extinguishing system of any one of aspect 9 to 10, wherein the spraying member includes a first spraying member for spraying the fire extinguishing agent into a lower part of the electric vehicle and a second spraying member for spraying the fire extinguishing agent into an upper part of the electric vehicle.

Aspect 12) A fire extinguishing method for an electric vehicle, extinguishing a fire occurring during charging an electric vehicle equipped with a battery by a charger, the method comprising: a communication operation of receiving status information of the electric vehicle or the charger from the electric vehicle or the charger; a determination operation of analyzing the status information and determining whether the electric vehicle is on fire; a signal transmission operation of transmitting a fire extinguishing signal to a fire extinguishing device configured to extinguish the fire in the electric vehicle; and a fire extinguishing operation of preparing to spray a fire extinguishing agent or spraying the fire extinguishing agent when the fire extinguishing signal is transmitted to the fire extinguishing device.

Aspect 13) The fire extinguishing method of aspect 12, wherein the determination operation includes an error code in the status information, wherein the error code includes a first state in which an error in the battery is detected or a second state in which a fire occurs in the electric vehicle, wherein the determination operation analyzes at least one of a temperature change of the battery, a voltage change of the battery, and a current change of the charger included in the status information and determines whether the electric vehicle is on fire.

Aspect 14) The fire extinguishing method of aspect 13, wherein the signal transmission operation transmits a fire extinguishing preparation signal to the fire extinguishing device in the first state, the fire extinguishing operation operates a pressurizing pump pressurizing the fire extinguishing agent contained in a storage tank when the fire extinguishing preparation signal is transmitted to the fire extinguishing device, and closes a pipe configured to discharge the fire extinguishing agent stored in the storage tank from the storage tank, and the determination operation is performed again.

Aspect 15) The fire extinguishing method of any one of aspect 13 to 14, wherein the signal transmission operation transmits a fire extinguishing execution signal to the fire extinguishing device in the second state, and the fire extinguishing operation operates a pressurizing pump pressurizing the fire extinguishing agent contained in a storage tank when the fire extinguishing execution signal is transmitted to the fire extinguishing device, and opens a pipe configured to discharge the fire extinguishing agent stored in the storage tank from the storage tank.

## Claims

1. A fire extinguishing system for an electric vehicle, comprising:
a charger configured to supply electricity to the electric vehicle and charge a battery mounted on the electric vehicle;
a charger control unit configured to receive status information of the electric vehicle or the charger from the electric vehicle or the charger and determine whether the electric vehicle is on fire; and
a fire extinguishing device configured to receive a fire extinguishing signal from the charger control unit and extinguish a fire occurring in the electric vehicle.

2. The fire extinguishing system of claim 1, further comprising a connector configured to connect the electric vehicle and the charger so that electricity is supplied from the charger to the electric vehicle, and configured to enable communication between the electric vehicle and the charger control unit.

3. The fire extinguishing system of any one of claims 1 to 2, wherein the status information includes an error code,
wherein the error code includes a first state in which an error in the battery is detected or a second state in which a fire occurs in the electric vehicle.

4. The fire extinguishing system of claim 3, wherein the charger control unit is configured to receive the error code and send a different fire extinguishing signal according to the first state or the second state to the fire extinguishing device.

5. The fire extinguishing system of claim 4, wherein the charger control unit is configured to stop a supply of electricity of the charger when an error code corresponding to the first state is received and configured to send a fire extinguishing preparation signal to the fire extinguishing device, and/or
wherein, when the fire extinguishing device receives the fire extinguishing preparation signal, the fire extinguishing device operates a pressurizing pump for pressurizing a fire extinguishing agent contained in a storage tank, and closes a pipe configured to discharge the fire extinguishing agent stored in the storage tank from the storage tank.

6. The fire extinguishing system of any one of claims 4 to 5, wherein the charger control unit is configured to stop a supply of electricity of the charger when receiving an error code corresponding to the second state and configured to send a fire extinguishing execution signal to the fire extinguishing device, and/or
wherein the fire extinguishing device is configured to operate a pressurizing pump for pressurizing a fire extinguishing agent contained in a storage tank when receiving the fire extinguishing execution signal, and configured to enable a pipe configured to discharge the fire extinguishing agent stored in the storage tank from the storage tank, to open.

7. The fire extinguishing system of any one of claims 1 to 6, wherein the status information includes at least one of a voltage change of the battery, a temperature change of the battery, and a current change of the charger, and the charger control unit is configured to analyze at least one of the voltage change of the battery, the temperature change of the battery, and the current change of the charger and to determine whether the electric vehicle is on fire.

8. The fire extinguishing system of claim 7, wherein the charger control unit is configured to determine a second state in which a fire has occurred in the electric vehicle when at least one of the voltage change of the battery, the temperature change of the battery, and the current change of the charger is outside of an allowable range.

9. The fire extinguishing system of any one of claims 1 to 8, wherein the fire extinguishing device includes a storage tank storing a fire extinguishing agent, a pressurizing pump pressurizing the fire extinguishing agent contained in the storage tank, a valve configured to open and close a pipe configured to discharge the fire extinguishing agent stored in the storage tank from the storage tank, and a spraying member connected to the pipe and spraying the fire extinguishing agent contained in the storage tank onto the electric vehicle.

10. The fire extinguishing system of claim 9, wherein the spraying member is configured to spray the fire extinguishing agent into an area including a lower part of the electric vehicle, and/or
wherein at least a portion of the spraying member is disposed on a ground and is disposed in a longitudinal direction of the electric vehicle.

11. The fire extinguishing system of any one of claims 9 to 10, wherein the spraying member includes a first spraying member for spraying the fire extinguishing agent into a lower part of the electric vehicle and a second spraying member for spraying the fire extinguishing agent into an upper part of the electric vehicle.

12. A fire extinguishing method for an electric vehicle, extinguishing a fire occurring during charging an electric vehicle equipped with a battery by a charger, the method comprising:
a communication operation of receiving status information of the electric vehicle or the charger from the electric vehicle or the charger;
a determination operation of analyzing the status information and determining whether the electric vehicle is on fire;
a signal transmission operation of transmitting a fire extinguishing signal to a fire extinguishing device configured to extinguish the fire in the electric vehicle; and
a fire extinguishing operation of preparing to spray a fire extinguishing agent or spraying the fire extinguishing agent when the fire extinguishing signal is transmitted to the fire extinguishing device.

13. The fire extinguishing method of claim 12, wherein the determination operation includes an error code in the status information,
wherein the error code includes a first state in which an error in the battery is detected or a second state in which a fire occurs in the electric vehicle, and/or
wherein the determination operation analyzes at least one of a temperature change of the battery, a voltage change of the battery, and a current change of the charger included in the status information and determines whether the electric vehicle is on fire.

14. The fire extinguishing method of claim 13, wherein the signal transmission operation transmits a fire extinguishing preparation signal to the fire extinguishing device in the first state,
the fire extinguishing operation operates a pressurizing pump pressurizing the fire extinguishing agent contained in a storage tank when the fire extinguishing preparation signal is transmitted to the fire extinguishing device, and closes a pipe configured to discharge the fire extinguishing agent stored in the storage tank from the storage tank, and
the determination operation is performed again.

15. The fire extinguishing method of any one of claim 13 to 14, wherein the signal transmission operation transmits a fire extinguishing execution signal to the fire extinguishing device in the second state, and
the fire extinguishing operation operates a pressurizing pump pressurizing the fire extinguishing agent contained in a storage tank when the fire extinguishing execution signal is transmitted to the fire extinguishing device, and opens a pipe configured to discharge the fire extinguishing agent stored in the storage tank from the storage tank.
